Europäisches Patentamt

European Patent Office

Office européen des brevets

(11) Numéro de publication: **0 191 999 B1**

(12) **FASCICULE DE BREVET EUROPEEN**

(45) Date de publication de fascicule du brevet: **20.10.93** (51) Int. Cl.⁵: **H04L 12/28**, G06F 15/16

(21) Numéro de dépôt: **85402300.9**

(22) Date de dépôt: **26.11.85**

(54) **Procédé d'adressage entre une station émettrice d'un message et au moins une station réceptrice dans un réseau de communication et dispositif permettant la mise en oeuvre du procédé.**

(30) Priorité: **30.11.84 FR 8418245**

(43) Date de publication de la demande:
**27.08.86 Bulletin 86/35**

(45) Mention de la délivrance du brevet:
**20.10.93 Bulletin 93/42**

(84) Etats contractants désignés:
**BE DE GB IT LU NL**

(56) Documents cités:

**AFIPS CONFERENCE PROCEEDINGS - 1981 NATIONAL COMPUTER CONFERENCE, 4-7 mai 1981,Chicago, Illinois, pages 209-214, AFIPS Press, Arlington, Virginia, US; W.Y.CHENG et al.: "ILLINET - A 32 Mbits/sec. local-area network"**

**IBM SYSTEMS JOURNAL, vol. 22, no. 4, 1983, pages 417-434, Armonk, New York, US;J.M. JAFFE et al.: "SNA routing: Past, present, and possible future"**

**LOCAL NETWORKS FOR COMPUTER COMMUNICATIONS, Proceedings of the IFIP, Organizedby IBM, Zürich, 27-29 août 1980, pa-ges 191-205, North-Holland Publishing Co.,Amsterdam, NL; S. ANDLER et al.: "On enhancing local network communicationde-vices"**

(73) Titulaire: **BULL S.A.**
**Tour BULL,**
**1, place Carpeaux**
**F-92800 Puteaux(FR)**

(72) Inventeur: **Guerin, Christian**
**11, allée des Passières**
**F-38190 - Villard Bonnot(FR)**
Inventeur: **Martin, Pascal**
**Villa des Jonquilles**
**La Tuilerie**
**F-38410 - Uriage(FR)**
Inventeur: **Raison, Henri**
**23 Boulevard Maréchal Leclerc**
**F-38000 - Grenoble(FR)**

(74) Mandataire: **Debay, Yves et al**
**BULL S.A.,**
**Tour BULL Cédex 74,**
**PC/TB2803**
**F-92039 Paris La Défense (FR)**

**Description**

La présente invention concerne un procédé d'adressage entre une station émettrice d'un message et au moins une station réceptrice dans un réseau de communication et le dispositif permettant la mise en oeuvre du procédé.

Il est connu dans un réseau de communication mettant en liaison plusieurs stations susceptibles d'accomplir différentes tâches, de réaliser un adressage en associant à chaque station physique une adresse. Ce type d'adressage est appelé "adressage physique". L'adressage physique présente l'inconvénient pour le système de communication de devoir connaître le nombre et les possibilités des stations reliées au réseau et de désigner celles-ci par leurs adresses physiques chaque fois qu'il veut leur adresser un message. Ceci entraîne une multiplication des systèmes d'adressage (par exemple adresses symboliques utilisateur, adresses système, adresses transport...) et de multiples conversions d'adresses. Par conséquent ceci coûte cher en temps de transmission.

Cette multiplicité des systèmes d'adressage ne convient absolument pas dans le cas où l'on souhaite réaliser une architecture de machine répartie, dans laquelle chaque station est reliée au réseau et considérée par un opérateur figurant devant une station comme une machine compacte offrant des possibilités supérieures à celles de la station devant laquelle il se trouve. Dans ce cas il est intéressant que l'opérateur n'ait pas à se soucier du nombre de stations à mettre en oeuvre pour réaliser une tâche ou une application et encore moins de savoir quelles doivent être les stations qui sont susceptibles de réaliser cette tâche ou cette application.

L'invention a pour but un procédé d'adressage entre stations d'un même réseau réalisant une machine à architecture répartie permettant d'éliminer les inconvénients de l'adressage physique.

Le procédé d'adressage entre une station émettrice d'un message et au moins une station réceptrice dans un réseau de communication comprend les étapes suivantes: émission d'un message constitué d'une trame comportant, un début de trame, un champ d'adresse destinataire, un champ d'information et un champ vide. Un tel procédé est décrit dans AFIPS CONFERENCE PROCEEDINGS - 1981 NATIONAL COMPUTER CONFERENCE, 4-7 mai 1981, Chicago, Illinois, pages 209-214. Le bat sus-mentionné est atteint par le fait que le champ d'adresse destinataire comprend une première partie constituée par au moins un bit indiquant, suivant la valeur de cette partie, la considération de l'adresse constituée par la deuxième partie comme une adresse physique ou comme une adresse logique, et décodage de la première partie de l'adressage pour valider l'exploitation de la deuxième partie de l'adresse, pendant le temps de transit du message dans chaque station, vérification et détection d'une erreur en allant chercher dans une table contenue dans des moyens de mémorisation propre à chaque station, le contenu indiqué par l'adresse déduite de la deuxième partie du champ d'adresse destinataire.

Un autre but de l'invention est d'assurer la prise en compte de l'information véhiculée par le message lorsque dans le procédé d'adressage, l'adresse existe effectivement dans la table de la station.

Ce deuxième but est atteint par le fait que le procédé d'adressage comprend en outre une étape de validation de la prise en compte de l'information véhiculée par le message, lorsque le contenu de l'adresse déduite de la deuxième partie du champ d'adresse destinataire existe et qu'un contrôle d'erreur est satisfait.

Un autre but de l'invention est de signifier à la station émettrice du message qu'au moins une des station du réseau a assuré la prise en compte de l'information.

Ce but est atteint par le fait que le procédé d'adressage comprend en outre pour chaque station ayant validé la prise en compte de l'information une étape de positionnement à une valeur déterminée d'un bit du champ vide figurant en fin de trame.

Un autre but de l'invention est un procédé d'adressage permettant de créer un grand nombre d'adresses logiques par exemple un million, sans pour autant augmenter le champ d'adresse destinataire en proportion, ni nécessiter une taille de table en mémoire démesurée.

Ce but est atteint par le fait que le procédé d'adressage comprend une étape d'adressage d'une valeur contenue dans une première table de mémoire, par les bits de poids forts de la deuxième partie et une étape d'addition de la valeur, dans le cas où elle existe, non nulle par exemple, aux bits non utilisés de la deuxième partie pour constituer l'adresse déduite.

Un autre but de l'invention est de réaliser un dispositif permettant la mise en oeuvre du procédé.

Ce but est atteint par le fait que le dispositif comprend dans chaque station des moyens de reconnaissance de l'en-tête d'une trame, un premier moyen de stockage momentané de l'information correspondant au champ d'adresse destinataire, des premiers moyens de sélection d'une première partie du champ d'adresse destinataire constitué d'un certain nombre de bits de poids forts contenus dans les premiers moyens, des moyens de valider la recherche du contenu d'une adresse dans une mémoire

2

lorsque les bits de poids forts sélectionnés sont tous égaux à une même valeur, des seconds moyens de stockage des bits correspondant au champ d'information du message, des moyens de comparer le contenu adressé dans la mémoire avec des bits de la partie du champ d'adresse destinataire non sélectionnés par les premiers moyens de sélection et des moyens de valider la prise en compte de l'information contenue dans les seconds moyens de stockage.

Un autre but de l'invention est de réaliser un dispositif permettant d'effectuer de n'importe quelle station des acquittements de reconnaissance d'une adresse logique.

Ce but est atteint par le fait que le dispositif comprend des moyens de positionner au moins un bit d'un champ vide du message à une valeur déterminée de façon à réaliser des acquittements de reconnaissance d'une adresse logique.

D'autres caractéristiques et avantages de la présente invention apparaîtront plus clairement à la lecture de la description qui suit faite en référence aux dessins annexés dans lesquels :

- la figure 1 représente un réseau de communication entre plusieurs stations permettant de réaliser une architecture de machine répartie ;
- la figure 2 est une représentation d'une trame constituant le message transitant entre les différentes stations du réseau ;
- la figure 3 est un schéma de principe des circuits permettant la mise en oeuvre du procédé d'adressage entre stations ;
- la figure 4 représente schématiquement les tables de mémoire utilisées dans le procédé d'adressage.
- la figure 5 représente schématiquement le circuit permettant d'assurer l'acquittement d'un adressage.
- la figure 6 représente une variante d'éxécution d'une partie du circuit de la figure 3.

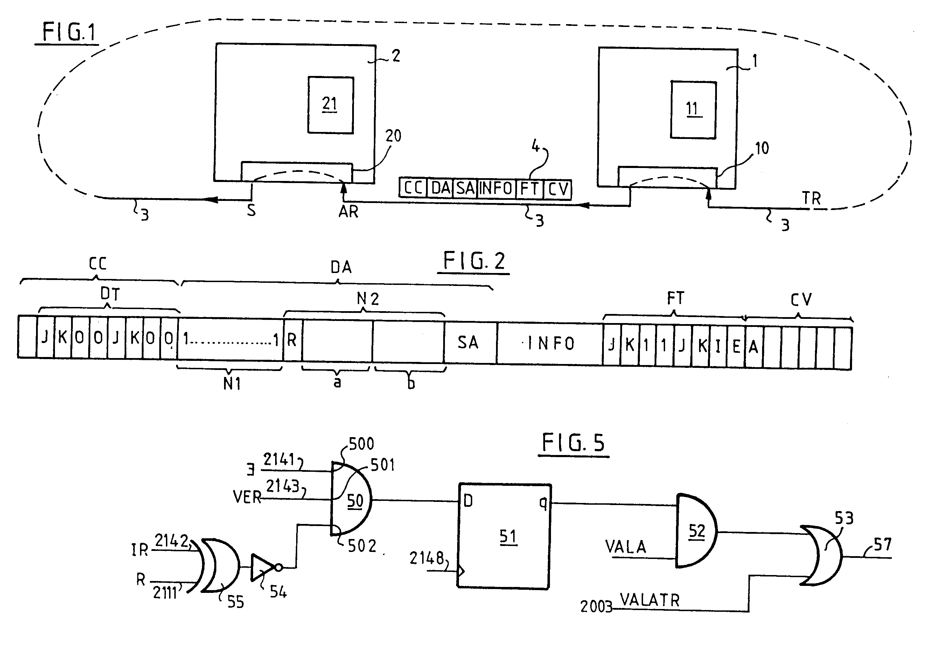

La figure 1 représente un reseau constitué par une station émettrice (1) reliée par des câbles (3) à une station réceptrice (2) elle-même reliée par des câbles (3) à d'autres stations non représentées. L'ensemble des câbles (3) peut former une boucle. La station (1) est considérée comme la station émettrice mais il est bien évident que chacune des stations du réseau peut éventuellement jouer le rôle de station émettrice et dans ce cas là, la station (1) peut devenir une station réceptrice. La station émettrice (1) émet sur le câble (3) un message (4) codé en Manchester par exemple et constitué par une trame représentée à la figure 2 après décodage et comportant plusieurs champs. Ce message (4) comporte un premier champ de contrôle (CC) servant à signaler à chaque station l'arrivée d'un message. Ce champ de contrôle comporte entre autres un code indiquant le début de trame (DT). Le champ de contrôle est suivi d'un champ d'adresse destinataire (DA). Le champ d'adresse destinataire est suivi d'un champ d'adresse source ou émetteur (SA), définissant l'organe émetteur. Ce champ d'adresse source est suivi d'un champ (INFO) contenant les informations transmises par le message. On trouve à la fin de la trame un code indiquant la fin de trame (FT), puis un champ vide (CV) qui pourra être rempli au fur et à mesure du passage de chaque trame dans chaque station, comme représenté à la figure 2. Pendant le passage du message dans la couche physique (10) de la station (1), et (20) de la station (2), chaque station détecte le champ de contrôle (CC) et son en-tête (DT), prélève les bits constitués par le champ d'adresse destinataire, va regarder dans une table (11, 21) respectivement des stations (1) et (2) si cette adresse est contenue dans cette table de mémoire, en même temps mémorise momentanément le mes sage constitué par l'information et dans le cas où l'adresse transportée par le message figure également dans la table, valide l'entrée de l'information et, positionne un bit du champ vide du message à une valeur déterminée de façon à indiquer que la prise en compte de l'information a été effectuée.

Comme on peut le comprendre ce procédé d'adressage présente l'avantage de s'affranchir de l'établissement d'une correspondance bi-univoque entre les adresses destinataires et les stations physiquement présentes dans le réseau. D'autre part, pour l'opérateur qui se trouve devant la station (1) il n'est plus nécessaire de connaître la constitution du réseau et la station (1) apparait comme étant une machine présentant la capacité et les facultés offertes par l'assemblage des différentes stations du réseau. Ce procédé est donc particulièrement intéressant dans les machines à architecture répartie dans lesquelles le réseau de communication doit rester transparent pour l'opérateur. Dans chaque table de chaque station, les adresses correspondent à des objets disponibles ou pouvant être effectués par la station. Ces objets peuvent être à titre d'exemple, soit une ressource physique telle qu'une imprimante, soit une ressource logicielle telle qu'une tâche, soit un mécanisme tel qu'une gestion de verrou. Ces objets évoluent et par conséquent la table décrivant les objets disponibles évolue aussi dans le temps. Les tables reflètent les ressources en présence. Au départ il y a initialisation du système puis on crée ou on élimine un ou plusieurs objets. Ainsi on crée un nouvel objet dans la table, par exemple, par le fait de brancher un nouveau périphérique, de charger un nouveau programme, ou de recréer la fonction compilation de la station qui vient de tomber en panne dans une autre station. De même on peut éliminer un ou plusieurs objets dans le cas où l'utilisateur n'a plus besoin d'une ou plusieurs fonctions ou ressources. Par conséquent la configuration de la table représentative de celles-ci évolura dans le temps en fonction du travail effectué par chacunes des stations.

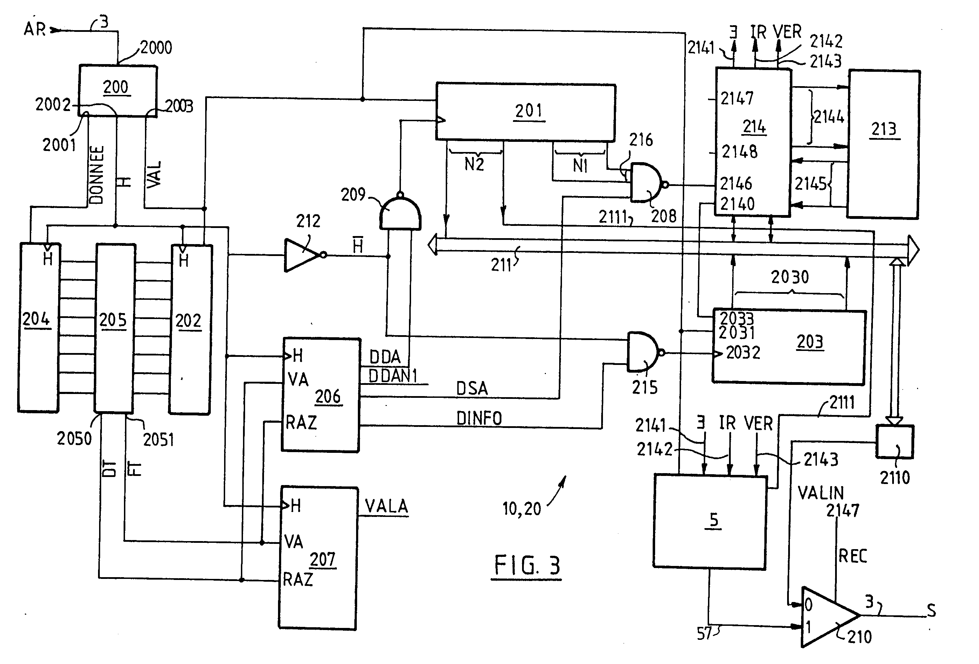

- La figure 3 représente la couche physique (10, 20) de chaque station assurant la détection du type d'adressage la prise en compte de l'information et l'acquittement au vol du message ceci pendant le temps de transfert du message entre la borne d'arrivée (AR) et la borne de sortie (S) de la station. Cette couche physique comprend un circuit de décodage (200) permettant d'assurer par la suite le mécanisme de reconnaissance de l'en-tête ou début de trame (DT), ainsi que la reconnaissance de fin de trame (FT). Le début de trame après décodage présente comme figuré (fig. 2) une succession de huit bits dont les deux premiers représentent une information non-donnée J, K, les deux suivants les données 0, les deux suivants les non-données J, K, et les deux suivants les données 0. Le circuit 200 extrait des signaux reçus sur l'entrée 2000, un signal d'horloge H, un signal donnée et un signal VAL (valeur de la donnée ou de la non-donnée). Ces signaux sont délivrés respectivement sur les sorties 2002, 2001, 2003 et répondent à la table de vérité ci-dessous.

| Données / Valeurs | 0 | 1 |
|---|---|---|
| O | J | O |
| 1 | K | 1 |

Compte tenu de la table de vérité la sortie 2003 (VAL) indique la valeur de la donnée ou de la non-donnée et un registre 202 à décalage branché sur la sortie 2003 sera chargé dans le cas d'un début de trame par les huit bits suivants : 0, 1, 0, 0, 0, 1, 0, 0, et dans le cas d'une fin de trame par les bits suivants 0, 1, 1, 1, 0, 1, $\dot{\text{I}}$, E, (E et $\dot{\text{I}}$ = valeur indifférente soit 0 , soit 1). La sortie donnée 2001 indique si l'on a une donnée ou une non-donnée. Dans le cas d'un début de trame ou d'une fin de trame on aura les huits bits suivants dans un registre à décalage 204 branché sur la sortie 2001: 0, 0, 1, 1, 0, 0, 1, 1, et dans le cas d'une donnée on aura un signal toujours égal à 1 , et par conséquent les huits bits du registre 204 à 1. Les décalages sont commandés par le signal H délivré sur la sortie 2002 du circuit 200 et branché sur l'entrée d'horloge des registres 202 et 204.

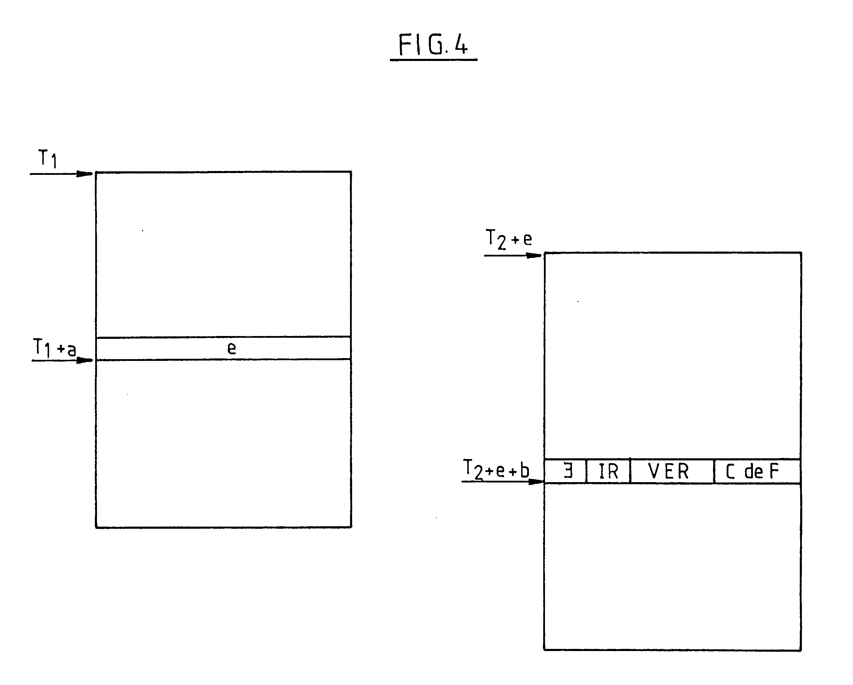

La comparaison des valeurs courantes des huits bits des registres 202 et 204 à des configurations de bits attendues sera effectuée par un circuit logique 205, facilement concevable pour l'homme de métier et dont les sorties 2050, 2051, délivrent respectivement les signaux DT et FT indiquant respectivement un début de trame et une fin de trame. Les sorties 2051 et 2050 sont reliées d'une part respectivement aux entrées VA (validation ) et RAZ (remise à zéro) d'un premier compteur 207 dont l'entrée H reçoit le signal d'horloge provenant de la sortie 2002. Ce compteur 207 est validé par le signal fin de trame et remis à zéro par le signal début de trame. Le compteur 207 compte les coups d'horloge H et émet sur une sortie le signal VAL A lorsque le nombre de coups d'horloge correspond au nombre de bits qui précédent le bit A du champ CV de la trame. On explicitera plus loin la signification du bit A, du champ CV de la trame. Le compteur 207 sert de séquenceur de fin de trame. Il est mis à zéro à la mise sous tension de l'équipement, et cycliquement au début de la réception d'une trame afin d'être prêt à opérer lors de la réception de la fin de chaque trame. Les sorties 2051 et 2050 sont reliées d'autre part respectivement aux entrées RAZ (remise à zéro) et VA (validation) d'un deuxième compteur 206. L'entrée H (horloge) du compteur 206 reçoit le signal d'horloge provenant de la sortie 2002 du circuit 200. Le compteur 206 sert de séquenceur de début de trame. Il est mis à zéro à la mise sous tension de l'équipement, et cycliquement (en cas de

4

fonctionnement normal) à la fin de la réception de chaque trame, afin d'être prêt à opérer au début d'une nouvelle trame. Une première sortie du compteur 206 délivre le signal DDA (durée adresse destinataire) dont le niveau change lors du début du champ DA de la trame et reste inchangé pendant toute la durée correspondante à ce champ. Pour fixer les idées si le champ DA comprend N bits la durée du signal DDA correspond à N coups d'horloge. Une deuxième sortie DDAN1 (durée de la partie N1 de l'adresse destinataire) du circuit 206 délivre un signal dont le niveau change avec le début du champ adresse destinataire et se prolonge pendant la première partie constituée de N1 bits de ce champ. Une troisième sortie DSA (durée adresse source) du circuit 206 délivre un signal dont le niveau change avec le début du champ SA et se prolonge pendant la durée de ce champ. Une quatrième sortie DINFO (durée information) délivre un signal qui change de niveau au début du champ information INFO et reste à ce niveau pendant toute la durée de sa réception. Le signal de la sortie DDA du compteur 206 est envoyé sur une première entrée d'une porte NON-ET 209 dont la deuxième entrée reçoit le signal $\overline{H}$ délivré par un circuit inverseur 212 dont l'entrée est reliée à la sortie 2002 du circuit 200. La sortie de la porte 209 est reliée à l'entrée d'horloge d'un registre à décalage 201 à N bits dont l'entrée des données reçoit le signal VAL délivré par la sortie 2003. Le signal DDA valide donc la transmission du signal $\overline{H}$ à l'entrée d'horloge du registre à décalage 201 et va permettre le décalage des N bits du champ DA. Ce nombre de bits (N) correspond au nombre de bits contenus dans le champ adresse destinataire. Une première partie du champ d'adresse destinataire constituée par N1 bits est reliée par une liaison (216) aux entrées parallèles d'une porte ET (208) dont une entrée reçoit également le signal DSA et qui lorsque toutes les entrées en parallèle ont la même valeur 1 délivre à sa sortie un signal envoyé sur une entrée d'interruption 2146 du microprocesseur (214) ou d'un équipement équivalent pour mettre en route le programme. La sortie de la porte ET (208) délivre donc un signal de valeur logique 1 lorsque la première partie N1 du champ d'adresse destinataire correspond à la valeur indiquant qu'il s'agit d'un adressage dit "logique" et par contre délivre un signal correspondant à une valeur logique zéro dans le cas où cette première partie N1 de l'adresse destinataire ne correspond pas à un adressage logique. La deuxième partie du champ adresse destinataire constitué par N2 bits est reliée au microprocesseur (214) par l'intermédiaire d'un circuit de multiplexage (non représenté) et d'un bus de liaison (211). Cette deuxième partie correspond à l'éventuelle adresse logique. Le signal envoyé par la porte ET (208) en synchronisme avec le signal (DSA) déclenche la recherche de l'adresse logique dès l'apparition du signal DSA. Le microprocesseur (214) est relié de façon connue par un bus d'adresse (2144) et un bus de donnée (2145) à une mémoire (213) qui sert de mémoire de stockage du programme de recherche d'adresse logique et de moyen de mémorisation des tables contenant les adresses logiques. Dans le but d'augmenter le nombre de possibilités d'adresses logiques tout en limitant la taille des tables en mémoire, et le nombre de bits du champ d'adresse destinataire, on utilise pour cet adressage le procédé qui va être décrit à l'aide de la figure 4. La table d'adresse logique (11, 21) contenue dans la mémoire (213) comporte en fait deux tables (T1 et T2) représentées à la figure 4. Le microprocesseur extrait de la deuxième partie N2 du champ d'adresse destinataire constituée par N2 bits un nombre "a" de bits représentés à la figure 2 et constitués par les bits de poids forts. Ces bits "a" sont fournis au microprocesseur (214) par la liaison (211) et servent à définir l'adresse T1 + a (figure 4) recherchée par le dispositif dans la première table (T1). Dans le cas où, à cette adresse il existe un contenu (e), par exemple non nul, le programme se poursuit en prélevant dans les N2 bits de la deuxième partie N2 du champ d'adresse destinataire un nombre "b" de bits (figure 2) que l'on ajoute au contenu (e) de la table (T1) ceci de façon à définir l'adresse recherchée T2 + e + b dans une table (T2) dont le contenu est constitué par un bit ∃ indiquant l'existence de l'adresse logique, un bit IR indiquant l'image de routage, un champ de bits permettant une vérification (et un champ de bits C de F permettant un contrôle de flux). Dans le cas où dans la table (T2) le bit ∃ indiquant l'existence est positionné à 1 et où après application d'un algorithme de vérification, sur les N2 bits, la valeur déduite des N2 bits de la deuxième partie du champ d'adresse correspond à la valeur contenue dans le champ de vérification VER de la table (T2) le microprocesseur (214) envoie des signaux à un circuit (5) de modification du bit A du champ CV et prend en compte les sorties parallèles 2030, reliées au bus 211 par un circuit de multiplexage (non représenté), d'un registre a décalage 203 à P bits, (P correspondant au nombre de bits du champ information INFO). Ce registre à décalage reçoit sur son entrée donnée 2031 les données fournies par le signal VAL délivré par la sortie 2003 du circuit 200 et sur son entrée d'horloge 2032 le signal délivré par une porte NON-ET 215 dont une première entrée reçoit le signal $\overline{H}$ délivré par la sortie du circuit 212 et dont une deuxième entrée reçoit le signal DINFO sortant du compteur 206. Le signal DINFO valide la transmission de l'horloge $\overline{H}$ pendant toute la durée de passage du champ l'information dans le circuit 200. Dans le cas où à l'adresse indiquée par "a" il n'existe pas de contenu (e) la recherche est terminée et ceci indique que l'adresse logique n'existe pas dans la table (T2) et par conséquent le message transporté par la trame (4) et disponible sur les sorties 2030 du registre 203 ne doit pas être pris en compte par la station. Ce procédé permet donc d'effectuer une recherche de l'adresse logique performante en temps, tout en limitant la taille des tables en mémoire, et tout en permettant de créer plusieurs milliers d'adresses logiques dans une station, dans un espace de plusieurs millions d'adresses possibles sur le réseau de communication. La liaison (2140, 2033) du microprocesseur vers le registre assure la validation de la sortie en parallèle des bits stockés dans le registre (203) vers les couches supérieures de la station lorsque l'information doit être prise en compte par la station, c'est-à-dire lorsque l'adresse logique existe dans la mémoire (213). La sortie 2003 du circuit 200 délivrant les données est réliée par un circuit 5 de modification de la valeur du bit A du champ vide CV à un multiplexeur (210) qui est lui-même branché, au travers d'un circuit de codage en Manchester (non représenté) à la sortie (S) de la station. Le multiplexeur 210 est commandé par la sortie 2147 du microprocesseur délivrant le signal REC (réception). Cette sortie (S) est reliée par un câble (3) à l'entrée d'une autre station. Une deuxième entrée du multiplexeur (210) reçoit du bus 211 au travers d'un circuit sérialisateur 2110, le signal valeur interne VALIN qui correspond à la succession de bits d'une trame qu'une station doit émettre lorsqu'elle travaille en émission. Le circuit (5) représenté à la figure (5) est commandé par les sorties (2141, 2142, 2143) du microprocesseur (214).

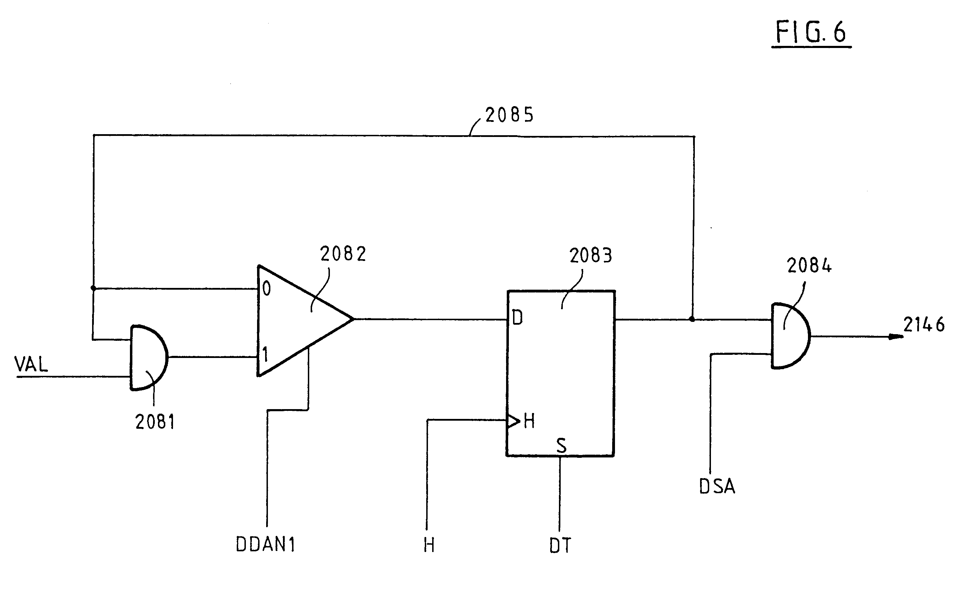

La figure 5 représente un circuit constitué par une porte ET à trois entrées recevant sur son entrée (500) un signal provenant de la sortie 2141 indiquant que l'adresse logique existe, sur sa deuxième entrée 5O1 un signal VER provenant de la sortie 2143 indiquant que la vérification a été faite et qu'elle est correcte, et sur sa troisième entrée 502 la sortie d'un inverseur 54 dont l'entrée reçoit la sortie d'un OU-ECLUSIF 55 à deux entrées. La première entrée reçoit le signal IR image de routage fourni par la sortie 2142 et la deuxième entrée reçoit le signal R fourni par la liaison 2111 et délivrant un signal correspondant à la valeur du bit R du champ DA de la trame. L'ensemble de ces signaux délivre en sortie un signal à l'entrée (D) d'une bascule (51) dont la sortie est envoyée sur une porte ET (52) recevant d'autre part un signal VALA indiquant que le bit (A) du champ vide (CV) de la trame (4) va se présenter, ce signal provenant du compteur 207. La sortie de la porte (52) est délivrée a l'entrée d'une porte OU (53) recevant sur son autre entrée un signal VALATR représentatif de la valeur du bit A de la trame que l'on recoit. La sortie de la porte OU (53) délivre par la liaison 57 le signal à l'entrée du multiplexeur 210 qui est commandé par le signal REC (réception) fourni par une sortie 2147 du microprocesseur.

En fonctionnement si le signal REC n'est pas actif le multiplexeur délivre le signal VALIN qui est la succession des bits d'une trame émise en série. Dans le cas où le signal REC est actif le multiplexeur 21O délivre sur sa sortie S le signal fourni par la liaison 57. Le signal 57 représente soit VALATR fourni par la sortie 2003 soit le signal délivré par la sortie de la porte 52. VALATR représente la valeur du bit A du champ CV de la trame reçue par la station. Dans le cas où cette valeur est à 1 cela veut dire qu'une station en amont a déjà reçu le message et la sortie de la porte 52 ne modifiera pas la valeur du bit A de la trame reçue. Dans le cas où cette valeur VALATR est 0 cela veut dire qu'aucune station en amont n'a reçu le message transporté par la trame et la sortie de la porte 52 pourra modifier la valeur du bit A en fonction du signal fourni par la sortie de la bascule 51. La sortie 52 sera au niveau 1 lorsque la sortie de la bascule 51 sera au niveau 1 et que le signal VALA est au niveau 1. Ce signal VALA est fourni par la sortie du compteur 207 lorsque celui-ci indique l'arrivée du bit A de la trame reçue. La sortie de la bascule D est au niveau 1 lorsque la sortie de la porte ET 50 est au niveau 1 et que l'entrée d'horloge de la bascule reçoit le signal émis par la sortie 2148 du microprocesseur. La sortie de la porte ET (50) est au niveau 1 lorsque chacune de ses entrées est au niveau 1 c'est-à-dire lorsque l'entrée 500 (∃, existence de l'adresse dans la table), l'entrée 501 (VER, vérification du processus de recherche de l'adresse) et l'entrée 502 (issue de comparateur (55) entre IR et R) sont au niveau 1. Le comparateur OU-EXCLUSIF (55) suivi de l'inverseur (54) fournit un niveau 1 sur l'entrée 502 si et seulement si IR (fourni par la table T2), et R (reçu dans le champ adresse destinataire de la trame courante) sont égaux.

Par conséquent ce circuit permet de s'assurer que dans le cas où la station a reconnu l'adresse logique le bit A du champ CV est porté au niveau 1 si la station est la première a reconnaître l'adresse et n'est pas modifié dans le cas où l'adresse a déjà été reconnue par une autre station en amont. Cette modification du bit A du champ vide permet à la station émettrice, dans un fonctionnement en boucle du réseau, de s'assurer que son message a été reçu par au moins une station sur le réseau. Il est bien évident que dans le cas d'un fonctionnement qui n'est pas en boucle cette modification du bit A perd de son intérêt, mais l'adressage logique conserve par contre tout son intérêt et son avantage.

La figure 6 représente un circuit qui peut se substituer à la porte ET 208 à N1 + 1 entrée et qui est de prix de revient moins élévé qu'une porte ET de ce type. Ce circuit est constitué par une porte ET 2081 dont la sortie est branchée à une entrée d'un multiplexeur 2082. La sortie du multiplexeur est reliée à l'entrée D d'une bascule 2083 dont l'entrée horloge reçoit le signal H provenant de la sortie 2002 du circuit 200. Le multiplexeur 2082 est commandé par le signal DDAN1 provenant du compteur 206. La bascule 2083 est mise à 1 en recevant sur son entrée S le signal DT (début de trame) provenant du circuit 205. La sortie de

6

la bascule est reliée d'une part à une entrée d'une porte ET à deux entrées 2084, et d'autre part par une liaison 2085 à une deuxième entrée de la porte ET 2081 et une deuxième entrée du multiplexeur 2082. La deuxième entrée de la porte ET 2084 reçoit le signal DSA provenant du compteur 206. La sortie de la porte ET 2084 est reliée à l'entrée 2146 du microprocesseur. La première entrée de la porte ET 2081 reçoit le signal VAL provenant de la sortie 2003 du circuit 200. Ainsi par cette réalisation on a substitué à une porte ET à N1 + 1 entrées, un circuit comprenant des portes ET à deux entrées. Dans ce cas, la liaison 216 des bits N1 avec la porte ET est supprimée et cette liaison est remplacée par la liaison de la porte ET 2081 au signal VAL.

En fonctionnement la sortie de la bascule 2083 est positionnée à 1 dès qu'elle reçoit le signal DT (début de trame), et reste à 1 aussi longtemps que le signal DDAN1 n'est pas apparu (entrée 0 du multiplexeur 2082 active). Mais au coup d'horloge suivant , le microprocesseur 2082 reçoit le signal DDAN1 qui fait commuter l'aiguillage du multiplexeur de la voie 0 à la voie 1. A ce moment là, la deuxième entrée de la porte ET 2081 étant déjà à 1, la sortie de cette porte reproduit le signal VAL et par conséquent la sortie de la bascule D restera à 1 tant que le signal VAL reste à 1. Si VAL passe à 0, la sortie de la bascule 2083 passe également à 0 et par conséquent l'entrée de la porte ET 2081 recevant un 0 va bloquer le circuit sur la valeur 0. Cette valeur sera maintenue jusqu'à l'apparition d'un nouveau signal DT remettant la bascule à 1. Lorsque la sortie de la bascule 2083 est à 1 et que le signal DSA passe au niveau 1 la sortie de la porte ET 2084 passe au niveau 1 et commande au microprocesseur la mise en oeuvre du programme de recherche de l'adresse logique. Le reste des opérations se poursuit comme décrit précédemment.

D'autres modifications sout à la portée de l'homme de métier.

Ainsi il est bien évident que dans le cas où le message transmis n'est pas codé en Manchester on utilisera les décodeurs et codeur appropriés, mais le contenu de la trame reste identique.

**Revendications**

1. Procédé d'adressage entre une station émettrice d'un message constitué d'une trame comportant un début de trame (DT) un champ d'adresse destinataire (DA), un champ d'information (INFO), une fin de trame (FT), puis un champ vide (CV), et au moins une station réceptrice (2) dans un réseau de communication caractérisé en ce qu'il comprend les étapes suivantes :
   - Emission d'un message dont le champ d'adresse destinataire (DA) comprend une première partie (N1) constituée par au moins un bit indiquant suivant la valeur de cette partie soit un adressage logique à prendre en compte, soit la considération de l'adresse constitué par une deuxième partie (N2) comme une adresse physique, la deuxième partie (N2) constituée par une pluralité (N2) de bits indiquant une adresse logique ou une adresse physique; décodage (216) de la première partie (N1) de l'adresse pour valider la lecture de la deuxième partie (N2) de l'adresse pendant le temps de transit du message dans chaque station; vérification et détection d'une erreur en allant chercher dans des tables (T1, T2) contenues dans des moyens de mémorisation (213) propres à chaque station le contenu (∃, IR, VER) indiqué par l'adresse déduite de la deuxième partie N2 du champ d'adresse destinataire.

2. Procédé d'adressage selon la revendication 1 caractérisé en ce qu'il comprend l'étape de validation de la prise en compte de l'information véhiculée par le message lorsque le contenu de l'adresse déduite de la deuxième partie (N2) du champ d'adresse destinataire existe et qu'un contrôle d'erreur est satisfait.

3. Procédé d'adressage selon la revendication 2 caractérisé en ce qu'il comprend l'étape de forçage à une valeur déterminée d'un bit (A) d'un champ vide (CV) figurant en fin de trame pour chaque station, ayant validé la prise en compte de l'information.

4. Procédé d'adressage selon une des revendications précédentes caractérisé en ce qu'il comprend une étape d'adressage d'une valeur e contenue dans une première table (T1) de mémoire par les bits a de poids fort de la deuxième partie (N2) et une étape d'addition de cette valeur e, dans le cas où elle existe, aux bits b non utilisés de la deuxième partie (N2) pour constituer l'adresse déduite.

5. Dispositif permettant la mise en oeuvre du procédé selon l'une des revendications précédentes caractérisé en ce que chaque station (1, 2) comprend des moyens de reconnaissance de l'en-tête d'une trame (200, 202, 204, 205);
   un premier moyen (201) de stockage momentané de l'information correspondant au champ d'adresse

7

destinataire ;

des premiers moyens de sélection (216, 206) d'une première partie (N1) d'un champ d'adresse destinataire constitué d'un certain nombre de bits de poids forts contenus dans les premiers moyens et des moyens de valider (208, 2081, 2082, 2083, 2084) la recherche du contenu (e) d'une adresse dans une mémoire (213) lorsque les bits de poids forts sélectionnés sont tous égaux à une même valeur ; des seconds moyens de stockage (203) des bits correspondant au champ d'information du message ; des moyens (214) de comparer le contenu adressé dans la mémoire (213) avec les bits (N2) de la partie du champ d'adresse destinataire non sélectionnés par les premiers moyens de sélection pour valider la prise en compte de l'information contenue dans les seconds moyens de stockage (203).

**6.** Dispositif selon la revendication 5 caractérisé en ce qu'il comprend des moyens (50 à 55) de positionner au moins un bit (A) d'un champ vide à une valeur déterminée de façon à indiquer la prise en compte des messages (INFO) par au moins une station.

**7.** Dispositif selon la revendication 4 caractérisé en ce que les moyens de valider la recherche du contenu d'une adresse dans une mémoire (213) sont constitués par une porte ET (2084) recevant d'une part un signal (DSA) dont le niveau change avec le début du champ (SA) (adresse source) et se prolonge pendant la durée de ce champ, d'autre part le signal de sortie d'une bascule (2083) dont l'entrée reçoit la sortie d'un multiplexeur commandé par un signal (DDAN1) dont le niveau change avec le début du champ adresse destinataire et se prolonge pendant la première partie (N1) de ce champ, et recevant sur une de ses entrées la sortie d'une porte ET (2081) dont une entrée reçoit un signal (VAL), indiquant la valeur de donnée ou de non-donnée des informations reçues, une deuxième entrée de la porte ET (2081) et du multiplexeur (2082) recevant le signal de sortie de la bascule (2083) cette bascule (2083) étant commandée par l'horloge (H)et mise à 1 par un signal (DT) indiquant le début de la trame.

## Claims

**1.** Method of addressing between a station for transmitting a message consisting of a frame comprising a start of frame (DT), a target address field (DA), an information field (INFO), an end of frame (FT), then a blank field (CV), and at least one receiving station (2) in a communications network, characterised in that it includes the following steps:
  - transmission of a message of which the target address field (DA) includes a first portion (N1) consisting of at least one bit indicating, according to the value of this portion, either logical addressing to be accepted, or consideration of the address consisting of a second portion (N2) as a physical address, the second portion (N2) consisting of a plurality (N2) of bits indicating a logical address or a physical address;
  - decoding (216) of the first portion (N1) of the address in order to validate reading of the second portion (N2) of the address during the time of transit of the message in each station,
  - verification and detection of an error by searching in tables (T1, T2) contained in storage means (213) belonging to each station, for the content (∃, IR, VER) indicated by the address deduced from the second portion (N2) of the target address field.

**2.** Method of addressing according to claim 1, characterised in that it includes the step of validating retrieval of the information carried by the message when the content of the address deduced from the second portion (N2) of the target address field exists and an error check is satisfied.

**3.** Method of addressing according to claim 2, characterised in that it includes the step of setting to a given value a bit (A) of a blank field (CV) appearing at the end of frame for each station, having validated retrieval of the information.

**4.** Method of addressing according to any of the preceding claims, characterised in that it includes a step of addressing of a value e contained in a first memory table (T1) by the high-order bits a of the second portion (N2) and a step of addition of this value e, in the event that it exists, to the unused bits b of the second portion (N2) to form the deduced address.

**5.** Device making it possible to carry out the method according to any of the preceding claims, characterised in that each station (1, 2) includes means for recognition of the header of a frame (200, 202, 204, 205);

a first means (201) for temporary storage of the information corresponding to the target address field;

first means (216, 206) for selecting a first portion (N1) of a target address field consisting of a certain number of high-order bits contained in the first means, and means (208, 2081, 2082, 2083, 2084) for validating the search for the content (e) of an address in a memory (213) when the high-order bits selected are all equal to the same value;

second means (203) for storage of the bits corresponding to the information field of the message;

means (214) for comparing the content addressed in the memory (213) with the bits (N2) of the portion of the target address field not selected by the first means of selection for validating retrieval of the information contained in the second storage means (203).

6. Device according to claim 5, characterised in that it includes means (50 to 55) for positioning at least one bit (A) of a blank field at a given value so as to indicate retrieval of the messages (INFO) by at least one station.

7. Device according to claim 4, characterised in that the means for validating the search for the content of an address in a memory (213) consist of an AND gate (2084) receiving on the one hand a signal (DSA) of which the level changes with the start of the field (SA) (source address) and continues for the duration of this field, on the other hand the output signal of a flip-flop (2083) of which the input receives the output of a multiplexer controlled by a signal (DDAN1) of which the level changes with the start of the target address field and continues during the first portion (N1) of this field, and receiving at one of its inputs the output of an AND gate (2081) of which one input receives a signal (VAL) indicating the data or non-data value of the information received, a second input of the AND gate (2081) and of the multiplexer (2082) receiving the output signal of the flip-flop (2083), this flip-flop (2083) being controlled by the clock (H) and set to 1 by a signal (DT) indicating the start of the frame.

**Patentansprüche**

1. Verfahren zur Adressierung zwischen einer eine Nachricht aussendenden Station, wobei die Nachricht durch einen Block gebildet ist, der einen Blockanfang (DT), ein Bestimmungsadressenfeld (DA), ein Informationsfeld (INFO), ein Blockende (FT), dann ein leeres Feld (CV) aufweist, und wenigstens einer Empfangsstation (2) in einem Kommunikationsnetz, dadurch gekennzeichnet, daß es die folgenden Schritte umfaßt:
   - Aussenden einer Nachricht, deren Bestimmungsadressenfeld (DA) einen ersten Teil (N1) aufweist, der durch wenigstens ein Bit gebildet ist, das entsprechend dem Wert dieses Teils anzeigt, daß entweder eine logische Adressierung zu berücksichtigen ist oder daß die von einem zweiten Teil (N2) gebildete Adresse als physikalische Adresse anzusehen ist, wobei der zweite Teil (N2), der von einer Mehrzahl (N2) von Bits gebildet ist, eine logische Adresse oder eine physikalische Adresse anzeigt;
   Dekodieren (216) des ersten Teils (N1) der Adresse, um das Lesen des zweiten Teils (N2) der Adresse während der Laufzeit der Nachricht in jede Station zu validieren;
   Verifizieren und Erfassen eines Fehlers, indem aus Tabellen (T1, T2), die in einer jeden Station eigenen Speichermitteln (213) enthalten sind, der Inhalt (Ǝ, IR, VER) geholt wird, der durch die aus dem zweiten Teil N2 des Bestimmungsadressenfeldes abgeleitete Adresse angegeben wird.

2. Adressierungsverfahren gemäß Anspruch 1, dadurch gekennzeichnet, daß es den Schritt der Validierung der Berücksichtigung der von der Nachricht transportierten Information umfaßt, wenn der Inhalt der aus dem zweiten Teil (N2) des Bestimmungsadressenfeldes abgeleiteten Adresse vorhanden ist und eine Fehlerprüfung erfüllt ist.

3. Adressierungsverfahren gemäß Anspruch 2, dadurch gekennzeichnet, daß es den Schritt des zwangsläufigen Setzens eines Bits (A) eines am Blockende vorhandenen Leerfeldes (CV) auf einen bestimmten Wert für jede Station umfaßt, die die Berücksichtigung der Information validiert hat.

4. Adressierungsverfahren gemäß einem der vorangehenden Ansprüche, dadurch gekennzeichnet, daß es einen Schritt der Adressierung eines in einer ersten Speichertabelle (T1) enthaltenen Wertes e durch die Bits a hoher Wertigkeit des zweiten Teils (N2) sowie einen Schritt umfaßt, in dem dieser Wert e, sofern er vorhanden ist, zu den nicht benutzten Bits b des zweiten Teils (N2) addiert wird, um die abgeleitete Adresse zu bilden.

**5.** Einrichtung, mit der das Verfahren gemäß einem der vorangehenden Ansprüche ausgeführt wird dadurch gekennzeichnet, daß jede Station (1, 2) versehen ist mit Mitteln zur Wiedererkennung des führenden Teils eines Blocks (200, 202, 204, 205);

einem ersten Mittel (201) zum momentanen Speichern der dem Bestimmungsadressenfeld entsprechenden Information;

ersten Mitteln zum Wählen (216, 206) eines ersten Teils (N1) eines Bestimmungsadressenfeldes, das von einer bestimmten Anzahl von Bits mit hohen Wertigkeiten gebildet ist, die in den ersten Mitteln vorhanden sind, und Mitteln zum Validieren (208, 2081, 2082, 2083, 2084) der Suche nach dem Inhalt (e) einer Adresse in einem Speicher (213), wenn die gewählten Bits mit hohen Wertigkeiten sämtlich gleich demselben Wert sind;

zweiten Mitteln zum Speichern (203) der Bits, die dem Nachrichteninformationsfeld entsprechen;

Mitteln (214) zum Vergleichen des adressierten Inhalts im Speicher (213) mit den nicht von den ersten Wählmitteln gewählten Bits (N2) des Teils des Bestimmungsadressenfeldes, um die Berücksichtigung der in den zweiten Speichermitteln (203) enthaltenen Information zu validieren.

**6.** Einrichtung gemäß Anspruch 5, dadurch gekennzeichnet, daß sie Mittel (50 bis 55) umfaßt zum Setzen wenigstens eines Bits (A) eines Leerfeldes auf einen bestimmten Wert, derart, daß die Berücksichtigung von Nachrichten (INFO) durch wenigstens eine Station angezeigt wird.

**7.** Einrichtung gemäß Anspruch 4, dadurch gekennzeichnet, daß die Mittel zum Validieren der Suche nach dem Inhalt einer Adresse in einem Speicher (213) durch ein UND-Gatter (2084) gebildet sind, das einerseits ein Signal (DSA), dessen Pegel sich mit dem Feldbeginn (SA) (Quelladresse) ändert und während der Dauer dieses Feldes anhält, und andererseits das Ausgangssignal einer Kippschaltung (2083) empfängt, deren Eingang den Ausgang eines Multiplexers empfängt, der durch ein Signal (DDAN1), dessen Pegel sich mit dem Bestimmungsadressen-Feldbeginn ändert und während des ersten Teils (N1) dieses Feldes anhält, gesteuert wird und an einem seiner Eingänge den Ausgang eines UND-Gatters (2081) empfängt, von dem ein Eingang ein Signal (VAL) empfängt, das den Daten-Wert oder den Nichtdaten-Wert der empfangenen Informationen anzeigt, wobei ein zweiter Eingang des UND-Gatters (2081) und des Multiplexers (2082) das Ausgangssignal der Kippschcntwng(2283) empfängt.wobgidiese Kippschaltung (2083) durch den Takt (H) gesteuert wird und durch ein Signal (DT), welches den Blockbeginn anzeigt, auf 1 gesetzt wird.

EP 0 191 999 B1

FIG.1

2

21

20

CC DA SA INFO FT CV    4

3    S    AR    3    TR    3

11

10

FIG.2

CC

DT

DA

N2

FT    CV

| J | K | 0 | 0 | J | K | 0 | 0 | 1...............1 | R | | | SA | INFO | J | K | 1 | 1 | J | K | I | E | A | | | | |

N1    a    b

FIG.5

500    501

∃  2141

VER  2143    50    502

IR  2142
R   2111    55    54

50    D    q    51

2148

VALA    52

2003  VALATR    53    57

FIG. 3

EP 0 191 999 B1

EP 0 191 999 B1

# FIG.4

$T_1$

$T_1 + a$     e

$T_2 + e$

$T_2 + e + b$    Ǝ   | IR | VER | C de F

FIG.6